# FASCICULE DE BREVET EUROPEEN

(11) **EP 2 121 392 B1**
(45) Date de publication et mention de la délivrance du brevet: **22.09.2010**
(21) Numéro de dépôt: 07857567.7
(22) Date de dépôt: 13.12.2007
(51) Int. Cl.: B60R 25/02

(54) **ANTIVOL DE SECURITE POUR VEHICULE**
DIEBSTAHLSICHERUNG FÜR FAHRZEUGE
ANTI-THEFT SECURITY DEVICE FOR VEHICLES

(30) Priorité: 19.12.2006 FR 0611105
(43) Date de publication de la demande: 25.11.2009
(73) Titulaire: Valeo Securité Habitacle, 94042 Créteil (FR)
(72) Inventeur: GIACOMIN, FABRICE, 94042 Creteil (FR)
(74) Mandataire: Jacquot, Ludovic R. G.
(86) Numéro de dépôt international: PCT/EP2007/063920
(87) Numéro de publication internationale: WO 2008/074726

(56) Documents cités:
- EP-A1- 0 631 912
- EP-A1- 1 084 915

## Description

La présente invention concerne un antivol de véhicule faisant intervenir un dispositif de verrouillage de la colonne de direction d'un véhicule lors du retrait de la clé de contact.

Elle concerne plus particulièrement, mais non exclusivement, un antivol de direction de véhicule automobile comportant un boîtier dans lequel un rotor est monté en rotation entre une position angulaire de repos (position appelée également position stop) dans laquelle une clé adaptée peut être introduite, d'avant en arrière, ou retirée axialement, et au moins une position angulaire d'utilisation, dans laquelle la clé ne peut être extraite du rotor, le rotor comportant un organe de sortie rotatif formant came qui est susceptible de coopérer avec un doigt de commande porté par un coulisseau pour commander les déplacements de ce dernier. Le coulisseau est monté coulissant dans le boîtier selon une direction axiale, entre une position avant d'antivol vers laquelle il est sollicité élastiquement et dans laquelle il fait saillie axialement vers l'avant à travers une ouverture du boîtier pour bloquer en rotation un organe de la colonne de direction lorsque le rotor est en position de repos, clé extraite, et une position arrière escamotée à l'intérieur du boîtier.

De nombreux perfectionnements ont été apportés aux antivols de ce type.

Il existe des rotors faisant intervenir une tirette de commande d'actionnement d'un pêne montée axialement coulissante, dont une extrémité porte un doigt basculant et dont l'autre extrémité est conformée de manière à coopérer avec un doigt de blocage mobile radialement au niveau de l'entrée du rotor. Ce doigt de blocage qui est situé à l'opposé du doigt basculant est conçu de manière à être déplacé par la clé lors de son introduction dans le rotor de manière à passer dans une position dans laquelle il coopère avec la tirette pour la bloquer axialement.

Les brevets FR 2 788 477 et EP 1 084 915 présentent des dispositifs permettant de retenir le coulisseau tant que la clé n'est pas complètement retirée.

Toutefois ces dispositifs ne sont pas satisfaisants car la tirette a tendance à se déformer lors des traitements de surface. Ce mode de réalisation est onéreux. La mise au point des éléments est délicate, et des tolérances serrées de fabrication doivent être respectées, ce qui augmente encore le cotit de fabrication. Des difficultés de montage apparaissent car le montage de l'ensemble avec une clé appairée au rotor n'est pas possible.

Les systèmes proposés jusqu'à aujourd'hui retiennent directement une tirette par un doigt mû radialement ou quasi-radialement par pression de la clé sur ce doigt qui à son tour bloque la tirette. L'action directe de ce doigt sur le coulisseau compte tenu des jeux, des frottements et des petits déplacements relatifs conduits aux problèmes énoncés plus haut.

Afin de remédier à ces inconvénients, l'invention propose un antivol de direction de véhicule automobile comportant un boîtier dans lequel un rotor est monté à rotation entre une position angulaire de repos dans laquelle une clé appropriée peut être introduite, par un orifice d'avant en arrière, ou retirée axialement d'arrière en avant, et au moins une position angulaire d'utilisation, dans laquelle la clé ne peut être extraite du rotor, le rotor comportant à l'opposé de l'orifice d'entrée un organe de sortie rotatif formant came comprenant une face interne sensiblement située dans un plan perpendiculaire à l'axe de rotation du rotor, la dite came étant susceptible de coopérer avec un doigt de commande porté par un coulisseau monté coulissant dans le boîtier, selon une direction axiale, entre une position arrière d'antivol vers laquelle il est sollicité par des moyens élastiques et dans laquelle il fait saillie axialement vers l'arrière à travers une ouverture du boîtier pour commander le blocage en rotation d'un organe de la colonne de direction lorsque le rotor est en position de repos, clé extraite, et une position avant escamotée à l'intérieur du boîtier.

Selon l'invention, cet antivol comprend en outre un dispositif de blocage comprenant :
- un palpeur situé au voisinage de l'entrée du rotor de manière à pouvoir être sollicité par la clé lors de son introduction dans le dit rotor,
- un organe de retenue escamotable mobile entre une position de verrouillage dans laquelle il agit sur le doigt de commande pour empêcher le déplacement longitudinal du coulisseau en direction de la came à l'encontre des moyens élastiques et une position de déverrouillage dans laquelle le coulisseau est « libéré » et peut se déplacer sous l'effet desdits moyens élastiques,
- des moyens de liaison entre ledit palpeur et le dit organe de retenue permettant de faire passer l'organe de retenue en position de verrouillage lorsque le rotor est en position de repos et que la clé y est engagée et en position de déverrouillage lorsque le rotor est en position de repos et que la clé est retirée du rotor.

Avantageusement :
- le dispositif de blocage pourra comprendre un levier basculant autour d'un axe YY' fixe par rapport au rotor et perpendiculaire à l'axe du rotor, ce levier comportant :
   a) à une extrémité un doigt de levier en saillie qui constitue les susdits moyens de retenue,
   b) à l'autre extrémité un étrier coopérant avec la clé au voisinage de l'orifice d'insertion de la clé dans le rotor,
- le doigt de levier pourra comprendre une face oblique qui est orientée suivant un angle compris entre 100 et 145 degrés par rapport à l'axe longitudinal LL' du levier basculant, de manière à ce que le doigt de levier puisse s'échapper sous l'action du doigt basculant soumis à la pression des susdits moyens élastiques, la clé étant retirée du rotor.
- la came pourra comprendre une cavité prévue pour loger complètement l'extrémité du levier comprenant le doigt de levier afin que le doigt de levier puisse s'escamoter complètement dans la cavité en laissant libre le doigt basculant de se mouvoir longitudinalement vers l'arrière du rotor lorsque le rotor est en position stop et que la clé est retirée.
- la face du doigt de levier coopérant avec le doigt basculant est sensiblement dans le plan de la face interne de la came de façon que le doigt basculant puisse passer sans difficulté d'un appui sur la face interne de la came à un appui sur la face du doigt de levier coopérant avec le doigt basculant, lorsque le rotor et la clé sont tournés et que le rotor arrive en position stop.
- le doigt de levier pourra être une pièce indépendante guidée radialement dans une rainure prévue à cet effet dans la came, et entraînée radialement par l'extrémité du levier lorsque celui-ci tourne autour de son axe d'articulation YY'.

Un mode de réalisation de l'invention sera décrit ci-après à titre d'exemple non limitatif, en faisant référence aux dessins annexés dans lesquels :
La figure 1 montre schématiquement une coupe d'un rotor selon l'invention, la clé étant insérée dans le rotor, le rotor étant en position stop, la tirette étant en position rentrée.
La figure 2 montre schématiquement une coupe d'un rotor selon l'invention, la clé étant retirée du rotor, le rotor étant en position stop, le coulisseau étant en position sortie.
La figure 3 montre schématiquement une vue en perspective d'un levier basculant suivant l'invention.
La figure 4 montre schématiquement une vue en perspective d'un coulisseau munie d'un doigt basculant.
La figure 5 montre schématiquement une vue éclatée du coulisseau, du doigt basculant et du ressort
La figure 6 montre schématiquement une vue en perspective d'une came montée en bout de rotor.

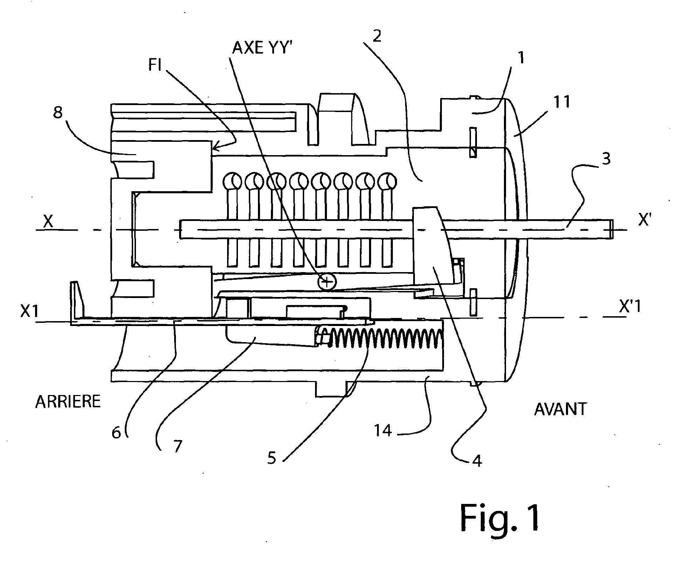

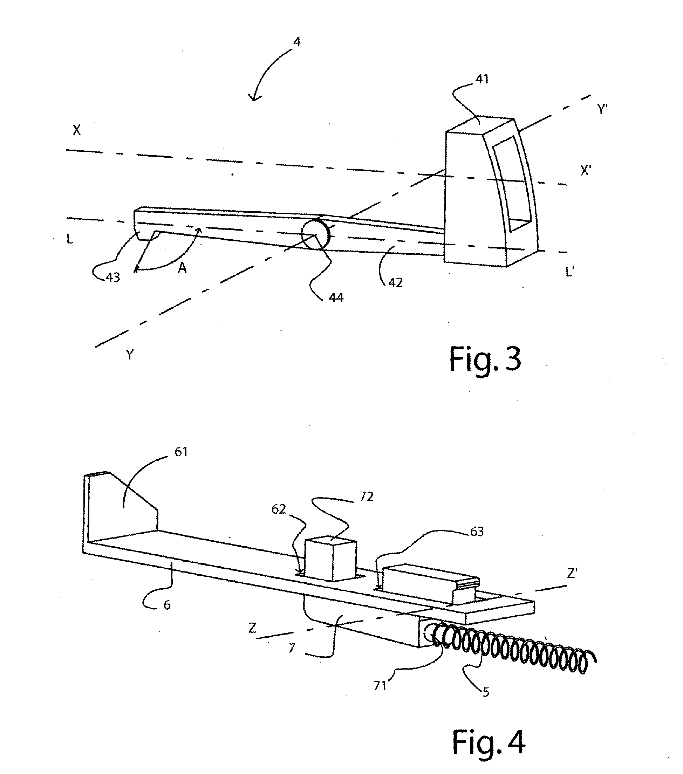

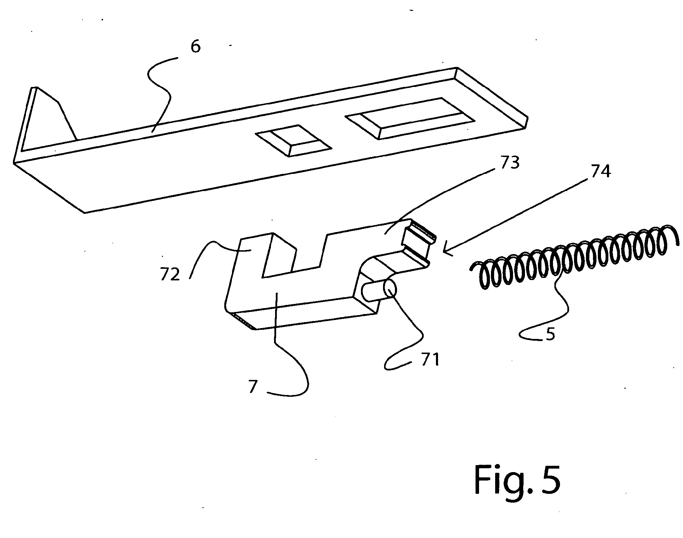

Dans l'exemple de réalisation non limitatif illustré dans les figures 1 à 6, le dispositif comprend principalement un boîtier 1 , un rotor 2, une clé 3, un levier basculant 4, un ressort 5, un coulisseau 6, un doigt basculant 7, et une came 8.

Le boîtier 1 comprend une face avant visible 11 d'introduction de la clé, et une face arrière 12. Ce boîtier comprend un logement interne 13, une surface d'appui 14, un logement axial formant glissière.

Le rotor 2 est monté tournant dans le boîtier. Il comprend une ouverture du coté de la face avant du boîtier permettant l'introduction de la clé. Il comprend également deux perçages cylindrique d'axe YY'

La clé 3 peut être introduite dans le rotor par la face avant du boîtier

Le levier basculant 4 comprend :
- un étrier 41 comprenant un orifice laissant passer la clé. La surface interne de l'orifice coopère avec la clé pour se placer dans une position haute lorsque la clé est dans le rotor, et se placer en position basse lorsque la clé est retirée du rotor
- un doigt de levier 43 comprenant une face de contact inclinée ici à 105 degrés par rapport à l'axe LL' du levier basculant et situé du coté opposé à l'étrier par rapport à l'axe YY' du levier basculant
- un corps 42 de forme longiligne reliant l'étrier 41 au doigt de levier 43
- deux tétons placés sensiblement au centre du levier et formant pivot autour de l'axe YY

Le ressort 5 travaille en compression. Il s'appuie à une de ses extrémités sur la surface d'appui du boîtier.

Le coulisseau 6 comprend à une extrémité une partie 61 permettant de le relier à un dispositif de verrouillage de la colonne de direction d'un véhicule, et à l'autre extrémité deux orifices successifs, à savoir, un orifice arrière 62 de forme rectangulaire et un orifice de forme rectangulaire avant 63.

Le doigt basculant 7 comprend un corps monobloc présentant d'un coté deux protubérances successives s'engageant respectivement au travers des deux orifices,
- la protubérance 72 de forme sensiblement parallélépipédique constitue un organe de blocage qui coopère avec le doigt de levier,
- la protubérance 73 sert à assurer la liaison pivotante entre le corps du doigt basculant 7 et le coulisseau 6. De forme sensiblement parallélépipédique elle comporte une concavité 74 dans laquelle s'engage un rebord de l'orifice du coulisseau de manière à former une charnière autour de laquelle le doigt basculant 7 peut basculer.
- un appui pour ressort 71 est placé sur le doigt basculant

La came 8 présente un corps 81 de forme générale cylindrique coaxiale au rotor, comportant une cavité débouchant au niveau de la face cylindrique par un orifice délimité successivement, à partir d'une première face axiale F1 du corps, par une face axiale F2, une face radiale F3 s'étendant à une faible distance de la deuxième face radiale du corps, et une face incurvée F4, sensiblement hélicoïdale qui se termine au niveau de la première face radiale du corps. Le fond de la cavité 120 présente du coté de la première face radiale du corps une portion cylindrique adjacente à la face incurvée suivie d'une concavité ou dégagement de tonne sensiblement parallélépipédique. Il présente en outre une forme en cuvette C constituant une sorte de rampe permettant le guidage du doigt basculant de la concavité à la face radiale cylindrique en suivant un trajet comportant un tronçon radial amenant le doigt contre la face incurvée, puis un tronçon incurvé le long de la face incurvée, pour parvenir enfin sur la portion cylindrique, avant de retrouver au droit de la concavité la première face radiale avant de revenir en regard de la concavité.

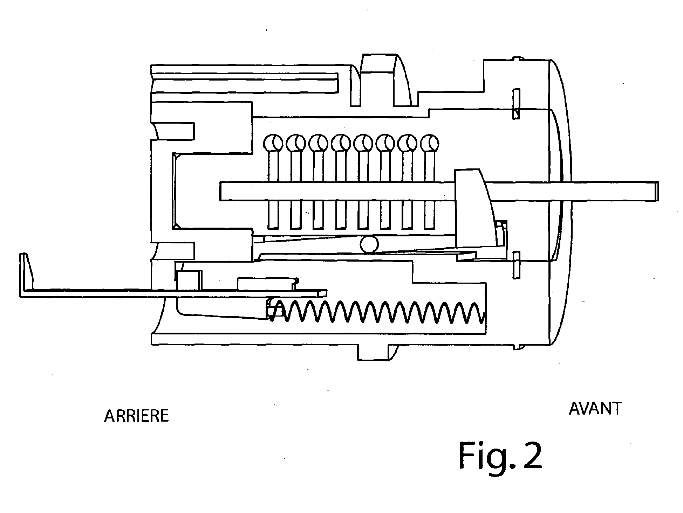

Le fonctionnement d'un tel dispositif est le suivant :
- En position de repos avant utilisation la clé est retirée du rotor (fig.2). Dans ce cas l'étrier du levier est en position basse et le doigt de levier est encastré dans la came de façon que le doigt de levier obture pratiquement la cavité toute entière prévue à cet effet dans la came. Le ressort pousse sur le doigt basculant qui à son tour pousse la tirette vers l'extérieur.
- En introduisant la clé dans l'étrier du levier basculant, on force sur la surface supérieure interne de l'étrier. Ceci conduit à faire tourner le levier basculant autour de son point de rotation et par voie de conséquence descendre le doigt 43
- En tournant la clé, le doigt basculant suit la came (surface F4). Le coulisseau se déplace alors vers l'avant du rotor jusqu'à ce que le doigt basculant arrive sur la face interne de la came (surface F1). Le coulisseau est alors dans la position rentrée.
- En revenant vers la position stop, le doigt basculant suit la face interne (surface F1) de la came qui est une surface plane perpendiculaire à l'axe XX'. Durant ce déplacement le doigt basculant et la tirette ne bougent pas. Le coulisseau reste en position rentrée. En arrivant prés de la position stop le doigt basculant ne s'appuie plus sur la face avant de la came mais sur la face avant du doigt de levier qui empêche le doigt basculant de rentrer dans la rainure axiale (C) de la came.
- Lorsqu'on retire la clé, le ressort pousse le doigt basculant qui a tendance à appliquer une pression axiale sur le doigt de levier et compte tenu des pentes respective a tendance à faire tourner le levier pour faire monter le doigt de levier dans une cavité de la came prévue à cet effet et ainsi libérer le chemin pour que le doigt basculant et la tirette poussées par le ressort puissent de déplacer vers l'arrière

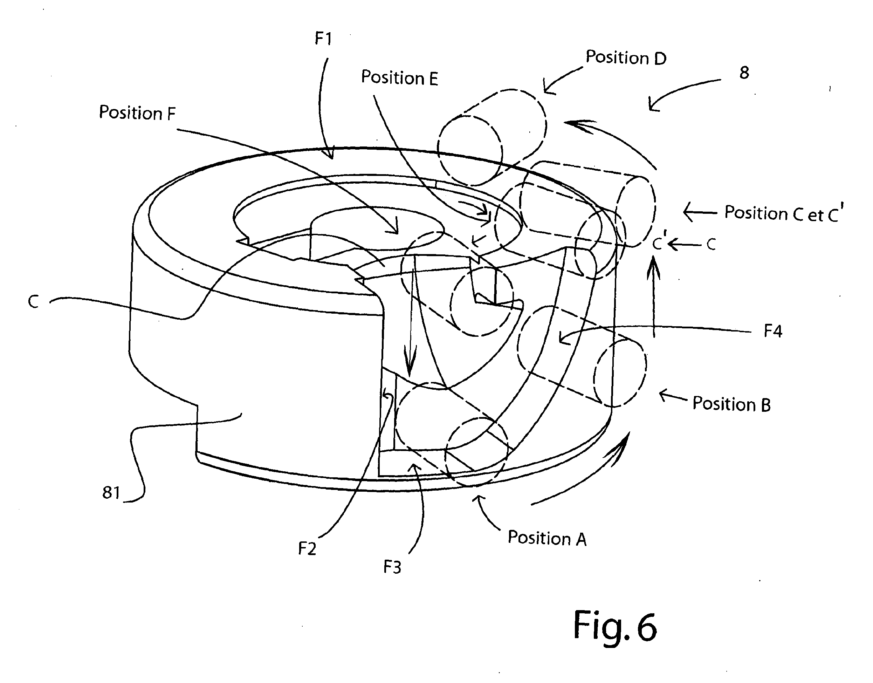

La figure 6 présente plus en détail les positions relatives du doigt basculant par rapport à la came. Le doigt basculant passe successivement de la position A à la position B puis la position C et C' puis la position D et revient ensuite en longeant la surface F1 vers la position A si son cheminement n'est pas obstrué par le doigt de levier.

On voit donc qu'il est possible de réaliser l'ensemble des opérations en n'utilisant qu'un seul ressort, et en ayant des mouvements précis des différents éléments mobiles. Le coulisseau est ainsi soumis à des efforts équilibrés qui le rendent moins sujet à des coincements intempestifs. Les efforts de frottement faibles permettent d'utiliser des matériaux plastiques moins chers.

L'homme de l'art pourra appliquer ce concept à de nombreux autres systèmes similaires sans sortir du cadre de l'invention défini dans les revendications jointes.

## Revendications

1. Antivol de direction d'un véhicule automobile comportant un boîtier (1) dans lequel un rotor (2) est monté à rotation entre une position angulaire de repos dans laquelle une clé appropriée (3) peut être introduite axialement par un orifice, d'une face avant visible (11) à une face arrière (12), ou retirée axialement, et au moins une position angulaire d'utilisation, dans laquelle la clé (3) ne peut être extraite du rotor (2), le rotor comportant à l'opposé dudit orifice un organe (8) placé sur sa face arrière et formant came susceptible de coopérer avec un doigt de commande (72) porté par un coulisseau (6) qui est monté coulissant dans le boîtier (1), selon une direction axiale, entre une position arrière d'antivol vers laquelle il est sollicité élastiquement par un ressort de compression (5) et dans laquelle il fait saillie axialement vers l'arrière à travers une ouverture du boîtier pour commander le blocage en rotation d'un organe de la colonne de direction lorsque le rotor (2) est en position de repos, clé extraite, et une position avant escamotée à l'intérieur du boîtier, **caractérisé en ce qu'**il comprend en outre un dispositif de blocage comprenant :
- un palpeur situé au voisinage de l'entrée du rotor de manière à pouvoir être sollicité par la clé dés son introduction dans le dit rotor,
- un organe de retenue escamotable mobile entre une position de verrouillage dans laquelle il agit sur le doigt de commande pour empêcher le déplacement longitudinal du coulisseau en direction de la came à l'encontre des moyens élastiques et une position de déverrouillage dans laquelle le coulisseau est « libéré » et peut se déplacer sous l'effet desdits moyens élastiques,
- des moyens de liaison entre ledit palpeur et le dit organe de retenue permettant de faire passer l'organe de retenue en position de verrouillage lorsque le rotor est en position de repos et que la clé y est engagée et en position de déverrouillage lorsque le rotor est en position de repos et que la clé est retirée du rotor.

2. Antivol selon la revendication 1, **caractérisé en ce que** l'organe de blocage est un levier basculant comprenant :
- à une extrémité un étrier (41) coopérant avec la clé (3)
- un axe central fixe YY' par rapport au rotor, perpendiculaire à l'axe XX' du rotor, le levier basculant étant libre de tourner autour de l'axe YY'
- à l'autre extrémité un doigt de levier coopérant avec le doigt de commande du coulisseau.

3. Antivol selon la revendication 1, **caractérisé en ce que** la face du doigt de levier (43) coopérant avec le doigt de commande (7) est orientée suivant un angle (A) compris entre 100 et 145 degrés par rapport à l'axe longitudinal LL' du levier basculant, de manière à ce que le doigt de levier s'échappe sous l'action doigt de commande (72) soumis à la pression du ressort (5), la clé étant retirée du rotor.

4. Antivol selon la revendication 1, **caractérisé en ce que** la came (8) comprend une cavité prévue pour loger complètement l'extrémité du levier comprenant le doigt de levier afin que le doigt de levier puisse s'escamoter complètement dans la cavité en laissant libre le doigt de commande (72) de se mouvoir longitudinalement vers l'arrière du rotor lorsque le rotor est en position stop et que la clé est retirée.

5. Antivol selon la revendication 1, **caractérisé en ce que** la face du doigt de levier (43) coopérant avec le doigt de commande (72) est sensiblement dans le plan de la face interne FI de la came (8) de façon que le doigt de commande puisse passer sans difficulté d'un appui sur la face interne de la came à un appui sur la face du doigt de levier coopérant avec le doigt basculant, lorsque le rotor et la clé sont tournés et que le rotor arrive en position stop.

6. Antivol selon l'une des revendications précédentes, **caractérisé en ce que** le doigt de commande (72) est monté traversant sur le coulisseau.

7. Antivol selon l'une des revendications précédentes **caractérisé en ce que** le doigt de levier est une pièce indépendante guidée radialement dans une rainure prévue à cet effet dans la came (8), et entraînée radialement par l'extrémité du levier lorsque celui-ci tourne autour de son axe d'articulation YY'.

## Claims

1. Steering lock anti-theft device for a motor vehicle, comprising a casing (1) in which a rotor (2) is mounted to rotate between an angular rest position in which an appropriate key (3) can be inserted axially through an orifice, from a visible front face (11) towards the rear face (12), or removed axially, and at least one angular position of use in which the key (3) cannot be extracted from the rotor (2), the rotor comprising, at the opposite end from the said orifice, a member (8) positioned on its rear face and acting as a cam capable of collaborating with an operating finger (72) borne by a slider (6) which is slidably mounted in the casing (1) such that it can slide in an axial direction between a rear anti-theft position into which it is elastically urged by a compression spring (5) and in which it projects axially rearward through an opening in the casing to prevent the rotation of a member of the steering column when the rotor (2) is in the rest position, with the key extracted, and a forward position retracted into the casing, **characterized in that** it further comprises a locking device comprising:
- a feeler situated near the entrance of the rotor so that it can be acted upon by the key as soon as the latter is inserted into the said rotor,
- a retractable retaining member capable of moving between a locked position in which it acts on the operating finger to prevent the longitudinal movement of the slider in the direction of the cam against the action of the elastic means and an unlocked position in which the slider is "free" and can move under the effect of the said elastic means,
- means of connection between the said feeler and the said retaining member allowing the retaining member to be moved into the locked position when the rotor is in the rest position and the key is engaged therein and into the unlocked position when the rotor is in the rest position and the key is removed from the rotor.

2. Anti-theft device according to Claim 1, **characterized in that** the locking member is a pivoting lever comprising:
- at one end, a yoke (41) collaborating with the key (3)
- a central axis YY' that is fixed with respect to the rotor, perpendicular to the axis XX' of the rotor, the pivoting lever being free to turn about the axis YY'
- at the other end, a lever finger collaborating with the slider operating finger.

3. Anti-theft device according to Claim 1, **characterized in that that** face of the lever finger (43) that collaborates with the operating finger (7) is directed at an angle (A) of between 100 and 145 degrees with respect to the longitudinal axis LL' of the pivoting lever so that the lever finger escapes under the action of the operating finger (72) subjected to the pressure of the spring (5) with the key removed from the rotor.

4. Anti-theft device according to Claim 1, **characterized in that** the cam (8) comprises a cavity designed to completely house that end of the lever that comprises the lever finger so that the lever finger can fully retract into the cavity leaving the operating finger (72) free to move longitudinally towards the rear of the rotor when the rotor is in the stop position and the key is removed.

5. Anti-theft device according to Claim 1, **characterized in that that** face of the lever finger (43) that collaborates with the operating finger (72) is substantially in the plane of the internal face FI of the cam (8) so that the operating finger can move without difficulty from pressing against the internal face of the cam to pressing against that face of the lever finger that collaborates with the pivoting finger when the rotor and the key are turned and the rotor reaches the stop position.

6. Anti-theft device according to one of the preceding claims, **characterized in that** the operating finger (72) is mounted traversely on the slider.

7. Anti-theft device according to one of the preceding claims, **characterized in that** the lever finger is an independent component guided radially in a slot provided for that purpose in the cam (8) and driven radially by the end of the lever when the latter rotates about its axis of articulation YY'.

## Patentansprüche

1. Lenkschloss eines Kraftfahrzeugs, das ein Gehäuse (1) aufweist, in dem ein Rotor (2) zwischen einer Ruhe-Winkelstellung, in der ein geeigneter Schlüssel (3) axial durch eine Öffnung von einer sichtbaren Vorderseite (11) zu einer Rückseite (12) eingeführt oder axial herausgezogen werden kann, und mindestens einer Betriebs-Winkelstellung drehbar montiert ist, in der der Schlüssel (3) nicht aus dem Rotor (2) herausgezogen werden kann, wobei der Rotor entgegengesetzt zu der Öffnung ein Organ (8) aufweist, das an seiner Rückseite angeordnet ist und eine Nocke bildet, die mit einem Steuerfinger (72) zusammenwirken kann, der von einem Schieber (6) getragen wird, welcher im Gehäuse (1) gemäß einer axialen Richtung zwischen einer hinteren Lenkschlossstellung, in die er elastisch von einer Druckfeder (5) beaufschlagt wird und in der er axial nach hinten durch eine Öffnung des Gehäuses vorsteht, um die Drehsperre eines Organs der Lenksäule zu steuern, wenn der Rotor (2) in der Ruhestellung bei herausgezogenem Schlüssel ist, und einer vorderen, ins Innere des Gehäuses eingezogenen Stellung gleitend montiert ist, **dadurch gekennzeichnet, dass** es außerdem eine Sperrvorrichtung enthält, die enthält:
- einen Taster, der sich in der Nähe des Eingangs des Rotors befindet, um vom Schlüssel bei seinem Einführen in den Rotor beaufschlagt zu werden,
- ein einziehbares Rückhalteorgan, das zwischen einer Verriegelungsstellung, in der es auf den Steuerfinger einwirkt, um die Längsverschiebung des Schiebers in Richtung der Nocke gegen elastische Einrichtungen zu verhindern, und einer Entriegelungsstellung beweglich ist, in der der Schieber "befreit" ist und sich unter der Wirkung der elastischen Einrichtungen verschieben kann,
- Verbindungseinrichtungen zwischen dem Taster und dem Rückhalteorgan, die es ermöglichen, das Rückhalteorgan in die Verriegelungsstellung übergehen zu lassen, wenn der Rotor in der Ruhestellung und der Schlüssel in ihn eingeführt ist, und in die Entriegelungsstellung übergehen zu lassen, wenn der Rotor in der Ruhestellung ist und der Schlüssel aus dem Rotor herausgezogen ist.

2. Lenkschloss nach Anspruch 1, **dadurch gekennzeichnet, dass** das Sperrorgan ein Kipphebel ist, der enthält:
- an einem Ende einen Bügel (41), der mit dem Schlüssel (3) zusammenwirkt,
- eine bezüglich des Rotors feste Mittelachse YY' lotrecht zur Achse XX' des Rotors, wobei der Kipphebel frei um die Achse YY' drehen kann,
- am anderen Ende einen Hebelfinger, der mit dem Steuerfinger des Schiebers zusammenwirkt.

3. Lenkschloss nach Anspruch 1, **dadurch gekennzeichnet, dass** die Seite des Hebelfingers (43), die mit dem Steuerfinger (7) zusammenwirkt, gemäß einem Winkel (A) ausgerichtet ist, der zwischen 100 und 145 Grad bezüglich der Längsachse LL' des Kipphebels liegt, damit der Hebelfinger unter der Wirkung des Steuerfingers (72) austritt, der dem Druck der Feder (5) ausgesetzt ist, wobei der Schlüssel aus dem Rotor herausgezogen ist.

4. Lenkschloss nach Anspruch 1, **dadurch gekennzeichnet, dass** die Nocke (8) einen Hohlraum enthält, der vorgesehen ist, um das den Hebelfinger enthaltende Ende des Hebels vollständig aufzunehmen, damit der Hebelfinger sich ganz in den Hohlraum zurückziehen kann, indem er dem Steuerfinger (72) die Möglichkeit lässt, sich in Längsrichtung zur Rückseite des Rotors zu bewegen, wenn der Rotor in der Stoppstellung und der Schlüssel herausgezogen ist.

5. Lenkschloss nach Anspruch 1, **dadurch gekennzeichnet, dass** die Seite des Hebelfingers (43), die mit dem Steuerfinger (72) zusammenwirkt, im Wesentlichen in der Ebene der Innenseite FI der Nocke (8) liegt, damit der Steuerfinger problemlos von einer Auflage auf der Innenseite der Nocke zu einer Auflage auf der Seite des Hebelfingers übergehen kann, der mit dem Kippfinger zusammenwirkt, wenn der Rotor und der Schlüssel gedreht werden und der Rotor in die Stoppstellung kommt.

6. Lenkschloss nach einem der vorhergehenden Ansprüche, **dadurch gekennzeichnet, dass** der Steuerfinger (72) durchquerend auf den Schieber montiert ist.

7. Lenkschloss nach einem der vorhergehenden Ansprüche, **dadurch gekennzeichnet, dass** der Hebelfinger ein unabhängiges Bauteil ist, das radial in einer zu diesem Zweck in der Nocke (8) vorgesehenen Rille geführt und radial vom Ende des Hebels mitgenommen wird, wenn dieser sich um seine Gelenkachse YY' dreht.
